# EUROPÄISCHE PATENTSCHRIFT

(11) **EP 2 753 483 B1**
(45) Veröffentlichungstag und Bekanntmachung des Hinweises auf die Patenterteilung: **15.11.2017**
(21) Anmeldenummer: 12761900.5
(22) Anmeldetag: 03.09.2012
(51) Int. Cl.: B60K 15/04, F01N 3/20

(54) **EINFÜLLSTUTZEN FÜR EIN FAHRZEUG**
FILLER NECK FOR VEHICLE
TUBULURE DE REMPLISSAGE POUR VÉHICULE

(30) Priorität: 09.09.2011 DE 102011113101
(43) Veröffentlichungstag der Anmeldung: 16.07.2014
(73) Patentinhaber: Volkswagen Aktiengesellschaft, 38440 Wolfsburg (DE)
(72) Erfinder: CORSTEN, Peter, 38104 Braunschweig (DE); KRAUS, Anton, 38442 Wolfsburg (DE); MOLAU, Kerstin, 38124 Braunschweig (DE)
(86) Internationale Anmeldenummer: PCT/EP2012/003673
(87) Internationale Veröffentlichungsnummer: WO 2013/034266

(56) Entgegenhaltungen:
- DE-U1-202007 018 245
- DE-U1-202010 001 147

## Beschreibung

Die vorliegende Erfindung beschreibt einen Einfüllstutzen für ein Fahrzeug, um beispielsweise eine Harnstoffwasserlösung (auch als AdBlues bekannt) sicher in einen Behälter bzw. Tank des Fahrzeugs einzufüllen.

Die WO 2007/006451 A1 beschreibt einen Einfüllstutzen für einen Behälter, wobei ein Kunststoffhalter einen bodenseitig abgeschlossenen Ringraum für einen Permanentmagneten aufweist. Durch diesen Ringraum ist der Kunststoffhalter nachteiligerweise in radialer Richtung relativ dick ausgebildet.

Die EP 1 502 794 A2 offenbart einen Einfüllstutzen, wobei ein Innenteil des Einfüllstutzens von einer eine Flüssigkeit aufnehmenden Öffnung des Einfüllstutzens her in ein Außenteil des Einfüllstutzens geschoben wird, um den Einfüllstutzen zu fertigen. Nach der Fertigung wird ein Magnet vollständig von dem Innenteil und dem Außenteil umschlossen. Die Einführung des Innenteils von der eine Flüssigkeit aufnehmenden Öffnung her weist konstruktive Nachteile auf.

Die DE 10 2009 029 362 A1 beschreibt einen Einfüllstutzenhalter, in welchen ein Einfüllstutzen von einer eine Flüssigkeit aufnehmenden Öffnung her in den Einfüllstutzenhalter eingeführt wird. Dabei weist der Einfüllstutzen einen Ringraum zur Aufnahme eines Magneten auf, welcher sowohl innen als auch außen mit einer Wand des Einfüllstutzens versehen ist. Durch diesen Ringraum ist der Einfüllstutzen nachteiligerweise in radialer Richtung relativ dick ausgebildet.

Die DE 10 2008 049 150 A1 beschreibt ein Einsatzelement, welches auf einen Einfüllstutzenaufsetzbar ist. Dieses Einsatzelement weist einen Ringmagneten auf, wobei der Ringmagnet mit einer Innenwand und einer Außenwand des Einsatzelementes geschützt ist. Da das Einsatzelement eine Innenwand und eine Außenwand aufweist, ist es in radialer Richtung nachteiligerweise relativ dick ausgebildet.

Die gattungsbildende DE 20 2010 001 147 U1 zeigt ein Einfüllstutzen für einen Behälter eines Fahrzeugs mit einem Oberteil und Träger, zwischen denen ein Magnet angeordnet ist. Der Oberteil und der Träger umfassen den ringförmigen Magnet direkt.

Die vorliegende Erfindung stellt sich die Aufgabe, einen Einfüllstutzen für ein Fahrzeug bereitzustellen, welcher die oben genannten Probleme nach dem Stand der Technik nicht aufweist. Erfindungsgemäß wird diese Aufgabe durch einen Einfüllstutzen nach Anspruch 1 und durch ein Fahrzeug nach Anspruch 7 gelöst. Die abhängigen Ansprüche definieren bevorzugte und vorteilhafte Ausführungsformen der vorliegenden Erfindung.
Im Rahmen der vorliegenden Erfindung wird ein Einfüllstutzen eines Behälters bzw. Tanks für ein Fahrzeug bereitgestellt. Dabei umfasst der Einfüllstutzen ein Oberteil, einen Träger und einen Magnet. Das im Wesentlichen ringförmige Oberteil weist eine erste Öffnung, über welche beispielsweise mittels einer Zapfpistole ein Fluid in den Behälter eingefüllt wird, und eine zweite Öffnung, über welche dieses Fluid dann in den Behälter abgegeben wird, auf. Das Oberteil und der Träger sind derart ausgestaltet, dass bei einer Montage des Einfüllstutzens der Magnet zusammen mit dem Träger von der zweiten Öffnung her in das Oberteil eingeführt wird. Im zusammengebauten Zustand des Einfüllstutzens wird der Magnet in einer Richtung senkrecht zur Mittelachse des Einfüllstutzens nach außen durch das Oberteil und nach innen durch den Träger abgeschirmt.

Vom Magnet her gesehen befindet sich in einer Richtung radial nach außen direkt neben dem Magnet eine ringförmige Außenwand des Oberteils und in einer Richtung vom Magnet radial nach innen direkt neben dem Magnet eine ringförmige Innenwand des Trägers.

Da bei der Montage der Magnet zusammen mit dem Träger von der zweiten Öffnung her in das Oberteil eingeführt wird, muss vorteilhafterweise am Ende des Einfüllstutzens, welches die erste Öffnung ausbildet, keine Rücksicht auf die Einführung des Trägers genommen werden, was konstruktiv vorteilhaft ist. Da der Magnet nach innen von der ringförmigen Innenwand des Trägers und nach außen von der ringförmigen Außenwand des Oberteils abgeschirmt wird, ist der Träger in radialer Richtung vergleichsweise dünn ausgestaltet, so dass auch das Oberteil des Einfüllstutzens vorteilhafterweise einen geringen Außendurchmesser aufweist.

Der Träger weist insbesondere einen mit der Innenwand verbundenen Boden auf, welcher einstückig mit der Innenwand ausgebildet ist und sich radial von der Innenwand nach außen erstreckt. Der Magnet, welcher insbesondere eine ringförmige Form aufweist, weist einen Innendurchmesser auf, welcher größer als der Außendurchmesser der ringförmigen Innenwand des Trägers ist. Bei dem zusammengebauten Einfüllstutzen ist der Magnet auf dem Boden des Trägers angeordnet, so dass sich die Innenwand des Trägers durch den Innendurchmesser des Magnets hindurch erstreckt.

Durch den Magnet, welcher in der Regel ein Permanentmagnet ist, kann ein Sensor einer Zapfpistole, welche in den Einfüllstutzen eingeführt wird, aktiviert werden, um ein Zuflussventil der Zapfpistole zu öffnen. Indem der Magnet auf dem Boden angeordnet ist, kann der Magnet zusammen mit dem Träger einfach in das Oberteil eingeführt werden.

Vorteilhafterweise ist der Einfüllstutzen derart ausgestaltet, dass sich von dem Magnet her gesehen radial nach außen direkt neben dem Magnet nur die Außenwand des Oberteils und radial nach innen direkt neben dem Magnet nur die Innenwand des Trägers befindet.

Anders ausgedrückt befindet sich beispielsweise radial nach außen direkt neben dem Magnet kein Teil des Trägers, und radial nach innen befindet sich neben dem Magnet kein Teil des Oberteils.

Um den Magnet flüssigkeitsdicht oder besser fluiddicht abzudichten, kann der Einfüllstutzen einen oder mehrere Dichtungsringe umfassen. Wenn beispielsweise ein Innendurchmesser der Außenwand des Oberteils einem Außendurchmesser des Bodens des Trägers entspricht, kann entweder der Boden radial außen eine ringförmige Nut oder die Außenwand des Oberteils an dieser Stelle (an welcher die Außenwand des Oberteils gegen den Boden des Trägers stößt) radial innen eine ringförmige Nut aufweisen. Ein Dichtungsring wird dann in dieser Nut angeordnet, um den Magnet fluiddicht an dieser Stelle abzudichten.

Darüber hinaus kann die Außenwand des Oberteils radial innen in einem Bereich zwischen der ersten Öffnung und dem Magnet in der Nähe des Magnets eine ringförmige Nut aufweisen, in welcher ein weiterer Dichtungsring angeordnet ist, um den Magnet auch an dieser Stelle flüssigkeitsdicht abzudichten.

Alternativ zur Abdichtung mit Dichtungsringen kann auch eine Verschweißung von Oberteil und Unterteil derart ausgeführt werden, dass eine Abdichtung des Permanentmagnets sichergestellt ist.

Es hat sich als vorteilhaft herausgestellt, in der Außenwand des Oberteils radial nach innen eine oder mehrere Entlüftungsnuten auszubilden, welche sich axial erstrecken.

Bei einem Betankungsvorgang mit einem Zapfventil können über eine Entlüftungsnut Gase aus dem Behälter geleitet werden, welche sich beispielsweise durch den Betankungsvorgang in dem Behälter bilden.

Der erfindungsgemäße Einfüllstutzen umfasst insbesondere darüber hinaus ein Unterteil. Das Unterteil besitzt eine ringförmige Außenwand, deren Innendurchmesser größer als ein Innendurchmesser des Oberteils ist. Darüber hinaus umfasst das Unterteil einen Vorsprung, welcher sich von der Außenwand des Unterteils nach innen erstreckt, um den Boden des Trägers abzustützen, wenn das Oberteil mit dem Unterteil verbunden ist.

Zur Montage des Einfüllstutzens wird das Oberteil mit dem Unterteil verschweißt.

Das Oberteil und/oder das Unterteil können aus Kunststoff, wie z.B. PA (Polyamid) oder HDPE (Polyethylen mit schwach verzweigten Polymerketten und damit eine hohen Dichte zwischen 0,94 g/cm³ und 0,97 g/cm³), hergestellt sein.

Im Rahmen der vorliegenden Erfindung wird auch ein Fahrzeug bereitgestellt, welches einen erfindungsgemäßen Einfüllstutzen und einen Behälter umfasst, welcher mit dem Einfüllstutzen in Verbindung steht.

Dabei kann es sich bei dem Behälter um einen Harnstoffbehälter handeln.

Die vorliegende Erfindung ermöglicht im Vergleich zum Stand der Technik eine einfache und kostengünstige Montage des Einfüllstutzens, wobei der Magnet nach der Montage fluiddicht und rüttelfest innerhalb des Einfüllstutzens angeordnet ist.

Die vorliegende Erfindung dient insbesondere einem sicheren Einfüllen einer Harnstoffwasserlösung in einen Tank eines Fahrzeugs mittels eines Lkw-Zapfventils. Selbstverständlich ist die vorliegende Erfindung nicht auf diesen bevorzugten Anwendungsbereich eingeschränkt, da die vorliegende Erfindung auch bei normalen Kraftfahrzeugen bzw. mit normalen Zapfventilen, insbesondere bei Dieselfahrzeugen, eingesetzt werden kann. Darüber hinaus ist der Einsatz der vorliegenden Erfindung auch bei Schiffen, Flugzeugen sowie gleisgebundenen oder spurgeführten Fahrzeugen zumindest prinzipiell denkbar. Schließlich kann die vorliegende Erfindung auch losgelöst von Fortbewegungsmitteln, beispielsweise bei einem stationären Tank, eingesetzt werden.

Im Folgenden wird die vorliegende Erfindung mit Bezug zu den Figuren anhand bevorzugter Ausführungsformen im Detail beschrieben.
Fig. 1 stellt einen erfindungsgemäßen Einfüllstutzen perspektivisch dar.
In Fig. 2 ist der in Fig. 1 dargestellte Einfüllstutzen von oben dargestellt.
Fig. 3 zeigt einen Querschnitt des Einfüllstutzens entlang der in Fig. 2 abgebildeten Schnittlinie A-A.
Fig. 4 zeigt einen Querschnitt des Einfüllstutzens entlang der in Fig. 2 abgebildeten Schnittlinie B-B.
Fig. 5 zeigt einen Querschnitt des Einfüllstutzens entlang der in Fig. 4 abgebildeten Schnittlinie C-C.

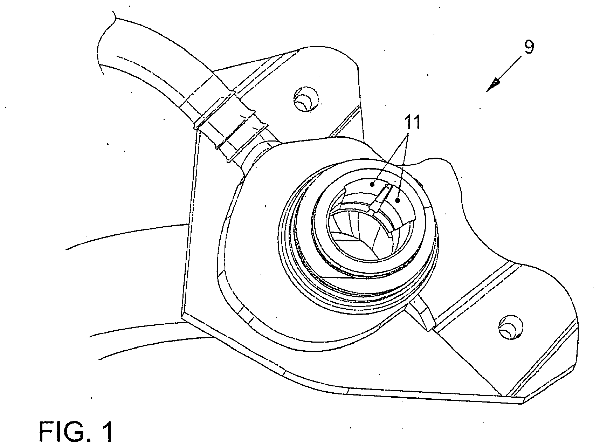

In Fig. 1 ist ein erfindungsgemäßer Einfüllstutzen 9 perspektivisch von oben (mit Blick auf die äußere Öffnung des Einfüllstutzens) dargestellt. Man erkennt zwei Entlüftungsnuten 11, welche sich von oben in axialer Richtung innen innerhalb des Einfüllstutzens 9 erstrecken.

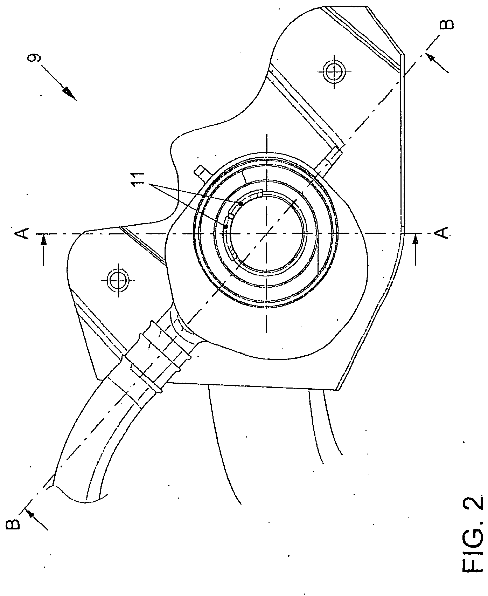

In Fig. 2 ist der in Fig. 1 dargestellte Einfüllstutzen 9 zweidimensional in einer Ansicht von oben dargestellt, wobei zwei Schnittlinien A-A und B-B abgebildet sind.

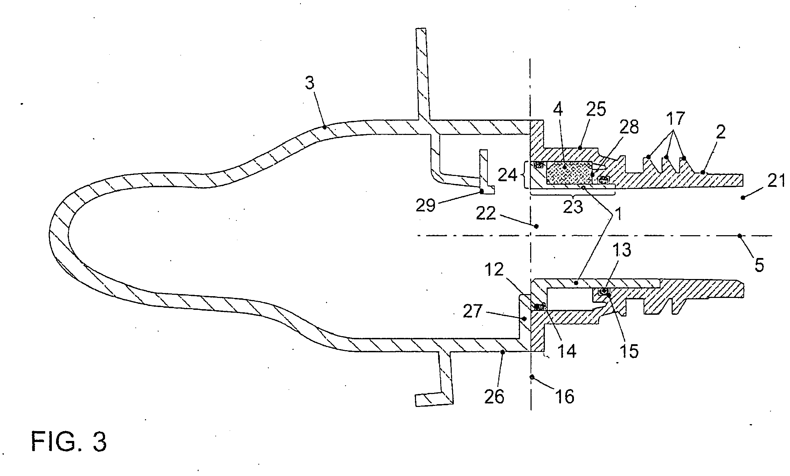

Fig. 3 zeigt einen Querschnitt des Einfüllstutzens 9 entlang der in Fig. 2 dargestellten Schnittlinie A-A. Man erkennt, dass der Einfüllstutzen 9 ein Unterteil 3, ein Oberteil 2, einen Träger 1 und einen ringförmigen Permanentmagnet 4 umfasst. Der einstückige Träger 1 umfasst seinerseits eine ringförmige Innenwand 23 und einen Boden 24, welcher sich von der Innenwand 23 radial nach außen erstreckt. Zur Montage wird der ringförmige Permanentmagnet 4 in den Träger eingeführt (d.h. der Innendurchmesser des Magnets 4 entspricht dem Außendurchmesser der ringförmigen Innenwand 23 des Trägers 1). Dann wird der Träger 1 zusammen mit dem Permanentmagnet 4 von unten (von der Öffnung 22 her) in das Oberteil 2 eingeführt.

Das Oberteil 2 weist eine obere Öffnung 21 und die untere Öffnung 22 auf. Um eine Flüssigkeit in einen mit dem Einfüllstutzen 9 verbundenen Tank einzuführen, wird beispielsweise eine Zapfpistole durch die obere Öffnung 21 in den Einfüllstutzen 9 eingeführt. Dadurch strömt ein in den Tank einzufüllendes Fluid zuerst durch die obere Öffnung 21 und dann durch die untere Öffnung 22 in den Tank.

Der Magnet ist nach innen (d.h. zur Mittelachse 5 des Einfüllstutzens 9) hin nur durch die ringförmige Innenwand 23 des Trägers 1 abgeschirmt, während der Magnet 4 nach außen nur durch die ringförmige Außenwand 25 des Oberteils 2 abgeschirmt ist. Während der Magnet 4 unten an dem Boden 24 des Trägers 1 anliegt, liegt der Magnet 4 oben an einem Vorsprung oder an einer Stufe 28 des Oberteils 2 an, welche sich von der Außenwand 25 radial nach innen erstreckt. Anders ausgedrückt kann sich der Magnet 4 im eingebauten Zustand weder nach unten (zur Öffnung 22) noch nach oben (zur Öffnung 21) hin bewegen.

Die dargestellte Ausführungsform des Einfüllstutzens 9 weist zwei Dichtungsringe 12, 13 auf, welche den Magnet 4 flüssigkeitsdicht abdichten. Der erste Dichtungsring 12 liegt in einer Umfangsnut 14, welche sich radial außen in dem Boden 24 des Trägers 1 um den Umfang des Bodens 24 herum erstreckt. Der zweite Dichtungsring 13 liegt in einer Umfangsnut 15, welche sich oberhalb des Magnets 4 in der Nähe des Magnets 4 radial nach innen in der Außenwand oder in der Stufe 28 des Oberteils 2 um den Umfang herum erstreckt.

Darüber hinaus ist aus der Fig. 3 zu entnehmen, dass das Oberteil 2 ein Außengewinde 17 oberhalb des Magnets 4 aufweist.

Eine Trennebene 16 unterteilt in Fig. 3 das Oberteil 2 und das Unterteil 3. Damit der Träger 1 im Oberteil 2 verbleibt, existiert ein Vorsprung 27 des Unterteils 3, welcher sich von einer Außenwand 26 des Unterteils 3 nach innen unter den Boden 24 des Trägers 1 erstreckt und diesen trägt, wenn das Unterteil 3 und das Oberteil 2 miteinander verschweißt sind.

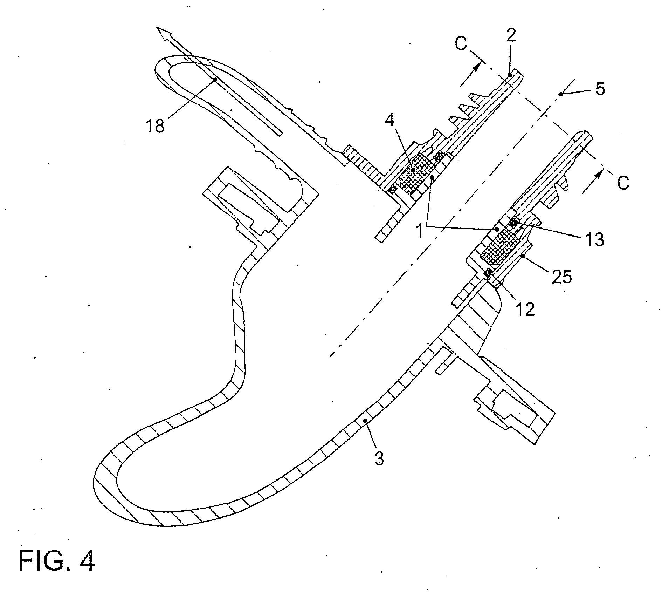

Fig. 4 zeigt einen Querschnitt des Einfüllstutzens 9 entlang der Schnittlinie B-B der Fig. 2. Man erkennt in Fig. 4 eine Entlüftung 18 im Unterteil 3 des Einfüllstutzens 9. Darüber hinaus ist in Fig. 4 eine Schnittlinie C-C eingezeichnet.

Der Fachmann erkennt beispielsweise an dem mit dem Bezugszeichen 29 gekennzeichneten L-förmigen Teil des einstückigen Trägers 1, dass der Träger 1 mit einem Labyrinth versehen ist, wodurch ein Rückschwall des Fluids um mehrere Ecken bzw. Windungen fließen muss, um durch das Labyrinth zu strömen. Darüber hinaus weist der Träger 1 eine keilförmige Verdrehsicherung auf, wodurch eine falsche Ausrichtung beim Einführen des Trägers in das Oberteil 2 vermieden wird. Bei der Montage des Einfüllstutzens 9 wird der Träger 1 in das Oberteil 2 eingeführt und durch Anlage im Unterteil 3 und Oberteil 2 dazwischen verpresst, wobei es durch das Zusammenschweißen von Oberteil 2 und Unterteil 3 zu einem Festsitz des Trägers 1 kommt.

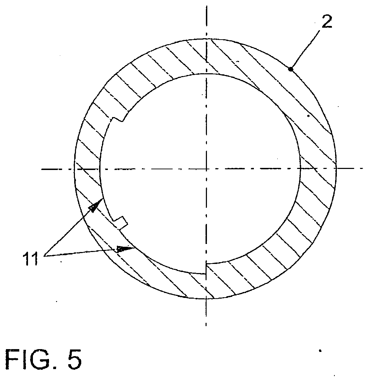

In Fig. 5 ist ein Querschnitt entlang dieser Schnittlinie C-C dargestellt. Man erkennt in diesem Querschnitt, dass das Oberteil 2 zwei Entlüftungsnuten 11 aufweist, welche sich radial innen in axialer Richtung im Oberteil 2 erstrecken.

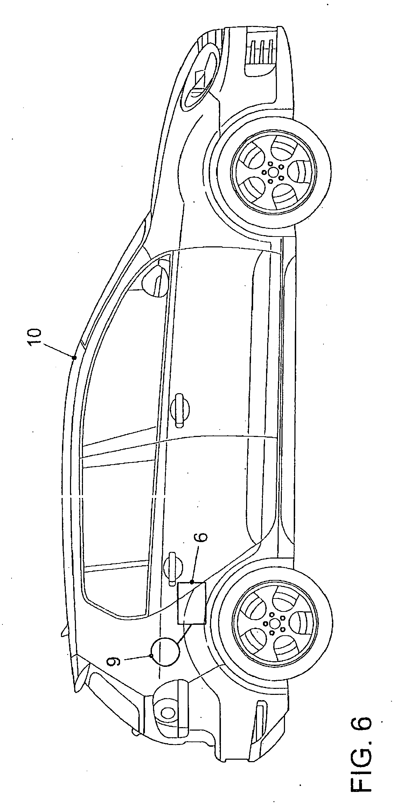

In Fig. 6 ist schematisch ein erfindungsgemäßes Fahrzeug 10 dargestellt, welches einen erfindungsgemäßen Einfüllstutzen 9 und einen damit in Verbindung stehenden Harnstoffbehälter 6 umfasst.

## Patentansprüche

1. Einfüllstutzen eines Behälters (6) für ein Fahrzeug (10),
wobei der Einfüllstutzen (9) ein Oberteil (2), einen Träger (1) und einen Magnet (4) umfasst, wobei das Oberteil (2) eine erste Öffnung (21) zur Aufnahme eines in den Behälter (6) einzufüllenden Fluids und eine zweite Öffnung (22) zur Abgabe des Fluids in den Behälter (6) aufweist,
wobei das Oberteil (2) und der Träger (1) ausgestaltet sind, um den Magnet (4) zusammen mit dem Träger (1) von der zweiten Öffnung (22) her in das Oberteil (2) einzuführen, und wobei in einer Richtung radial nach außen direkt neben dem Magnet (4) eine ringförmige Außenwand (25) des Oberteils (2) und in einer Richtung radial nach innen direkt neben dem Magnet (4) eine ringförmige Innenwand (23) des Trägers (1) vorhanden ist, wobei der Träger (1) einen mit der Innenwand (23) verbundenen Boden (24), welcher sich von der Innenwand (23) radial nach außen erstreckt, aufweist, dass der Magnet (4) ringförmig ist, wobei der Magnet (4) auf dem Boden (24) des Trägers (1) angeordnet ist, so dass sich die Innenwand (23) des Trägers (1) durch den ringförmigen Magnet (4) hindurch erstreckt, dass der Einfüllstutzen (9) ein Unterteil (3) umfasst, wobei das Unterteil (3) eine ringförmige Außenwand (26) umfasst, deren Innendurchmesser größer als ein Innendurchmesser des Oberteils (2) ist, und wobei das Unterteil (3) einen Vorsprung (27) umfasst, welcher sich von der Außenwand (26) des Unterteils (3) nach innen erstreckt, um einen Boden (24) des Trägers (1) abzustützen, **dadurch gekennzeichnet, dass** das Oberteil (2) derart mit dem Unterteil (3) verschweißt ist, dass eine Abdichtung des Magneten (4) sichergestellt ist und es zu einem Festsitz des Trägers (1) kommt.

2. Einfüllstutzen nach Anspruch 1, **dadurch gekennzeichnet, dass** radial nach außen direkt neben dem Magnet (4) nur die Außenwand (25) des Oberteils (2) und radial nach innen direkt neben dem Magnet nur die Innenwand (23) des Trägers vorhanden ist.

3. Einfüllstutzen nach Anspruch 1 oder 2,
**dadurch gekennzeichnet,**
**dass** der Einfüllstutzen (9) einen Dichtungsring (12) umfasst,
**dass** ein Innendurchmesser der Außenwand (25) des Oberteils (2) einem Außendurchmesser des Bodens (24) des Trägers (1) entspricht,
**dass** der Boden (24) radial außen eine ringförmige Nut (14) aufweist, und
**dass** der Dichtungsring (12) in der Nut (14) angeordnet ist und den Magnet (4) fluiddicht abdichtet.

4. Einfüllstutzen nach Anspruch 1 oder 2,
**dadurch gekennzeichnet,**
**dass** der Einfüllstutzen (9) einen Dichtungsring (12) umfasst,
**dass** ein Innendurchmesser der Außenwand (25) des Oberteils (2) einem Außendurchmesser des Bodens (24) des Trägers (1) entspricht,
**dass** die Außenwand (25) des Oberteils (2) radial innen eine ringförmige Nut aufweist, und dass der Dichtungsring (12) in der Nut angeordnet ist und den Magnet (4) fluiddicht abdichtet.

5. Einfüllstutzen nach einem der vorhergehenden Ansprüche,
**dadurch gekennzeichnet,**
**dass** der Einfüllstutzen (9) einen Dichtungsring (13) umfasst,
**dass** die Außenwand (25) zwischen der ersten Öffnung (21) und dem Magnet (4) in der Nähe des Magnets (4) eine ringförmige Nut (15) aufweist, und
**dass** der Dichtungsring (13) in der Nut (15) angeordnet ist und den Magnet (4) fluiddicht abdichtet.

6. Einfüllstutzen nach einem der vorhergehenden Ansprüche,
**dadurch gekennzeichnet,**
**dass** die Außenwand (25) des Oberteils (2) innen zumindest eine Entlüftungsnut (11) aufweist, welche sich axial erstreckt.

7. Fahrzeug mit einem Einfüllstutzen (9) nach einem der vorhergehenden Ansprüche und einem mit dem Einfüllstutzen (9) gekoppelten Behälter (6).

8. Fahrzeug nach Anspruch 7, **dadurch gekennzeichnet, dass** der Behälter ein Harnstoffbehälter (6) ist.

## Claims

1. Filler neck of a container (6) for a vehicle (10), wherein the filler neck (9) comprises an upper part (2), a support (1) and a magnet (4),
wherein the upper part (2) has a first opening (21) for receiving a fluid to be poured into the container (6) and a second opening (22) for discharging the fluid into the container (6), wherein the upper part (2) and the support (1) are configured in order to insert the magnet (4) together with the support (1) from the second opening (22) into the upper part (2), and
wherein an annular outer wall (25) of the upper part (2) is present in a direction radially outwards directly next to the magnet (4), and an annular inner wall (23) of the support (1) is present radially inwards directly next to the magnet (4),
wherein
the support (1) has a base (24) which is connected to the inner wall (23) and extends radially outwards from the inner wall (23),
in that the magnet (4) is annular,
wherein
the magnet (4) is arranged on the base (24) of the support (1), and therefore the inner wall (23) of the support (1) extends through the annular magnet (4), in that the filler neck (9) comprises a lower part (3),
wherein
the lower part (3) comprises an annular outer wall (26), the inner diameter of which is larger than an inner diameter of the upper part (2),
and wherein
the lower part (3) comprises a projection (27) which extends inwards from the outer wall (26) of the lower part (3) in order to support a base (24) of the support (1),
**characterized**
**in that** the upper part (2) is welded to the lower part (3) in such a manner that sealing of the magnet (4) is ensured and a firm fit of the support (1) occurs.

2. Filler neck according to Claim 1, **characterized in that** only the outer wall (25) of the upper part (2) is present radially outwards directly next to the magnet (4), and only the inner wall (23) of the support is present radially inwards directly next to the magnet.

3. Filler neck according to Claim 1 or 2,
**characterized**
**in that** the filler neck (9) comprises a sealing ring (12),
**in that** an inner diameter of the outer wall (25) of the upper part (2) corresponds to an outer diameter of the base (24) of the support (1),
**in that** the base (24) has an annular groove (14) radially on the outside, and
**in that** the sealing ring (12) is arranged in the groove (14) and seals off the magnet (4) in a fluid-tight manner.

4. Filler neck according to Claim 1 or 2,
**characterized**
**in that** the filler neck (9) comprises a sealing ring (12),
**in that** an inner diameter of the outer wall (25) of the upper part (2) corresponds to an outer diameter of the base (24) of the support (1),
**in that** the outer wall (25) of the upper part (2) has an annular groove radially on the inside, and in that the sealing ring (12) is arranged in the groove and seals off the magnet (4) in a fluid-tight manner.

5. Filler neck according to one of the preceding claims,
**characterized**
**in that** the filler neck (9) comprises a sealing ring (13),
**in that** the outer wall (25) between the first opening (21) and the magnet (4) has an annular groove (15) in the vicinity of the magnet (4), and in that the sealing ring (13) is arranged in the groove (15) and seals off the magnet (4) in a fluid-tight manner.

6. Filler neck according to one of the preceding claims,
**characterized**
**in that** the outer wall (25) of the upper part (2) has, on the inside, at least one venting groove (11) which extends axially.

7. Vehicle with a filler neck (9) according to one of the preceding claims and a container (6) which is coupled to the filler neck (9).

8. Vehicle according to Claim 7, **characterized in that** the container is a urea container (6).

## Revendications

1. Tubulure de remplissage d'un réservoir (6) pour un véhicule (10),
dans laquelle la tubulure de remplissage (9) comprend une partie supérieure (2), un support (1) et un aimant (4),
dans laquelle la partie supérieure (2) présente une première ouverture (21) pour la réception d'un fluide à verser dans le réservoir (6) et une deuxième ouverture (22) pour la décharge du fluide dans le réservoir (6), dans laquelle la partie supérieure (2) et le support (1) sont configurés de façon à introduire l'aimant (4) en même temps que le support (1) de la deuxième ouverture (22) dans la partie supérieure (2), et
dans laquelle il se trouve, dans une direction orientée radialement vers l'extérieur directement à côté de l'aimant (4), une paroi extérieure annulaire (25) de la partie supérieure (2) et dans une direction orientée radialement vers l'intérieur directement à côté de l'aimant (4) une paroi intérieure annulaire (23) du support (1),
dans laquelle le support (1) présente un fond (24) relié à la paroi intérieure (23), et qui s'étend de la paroi intérieure (23) radialement vers l'extérieur, dans laquelle l'aimant (4) est annulaire,
dans laquelle l'aimant (4) est disposé sur le fond (24) du support (1) de telle manière que la paroi intérieure (23) du support (1) s'étende à travers l'aimant annulaire (4),
dans laquelle la tubulure de remplissage (9) comprend une partie inférieure (3),
dans laquelle la partie inférieure (3) comprend une paroi extérieure annulaire (26), dont le diamètre intérieur est plus grand qu'un diamètre intérieur de la partie supérieure (2), et
dans laquelle la partie inférieure (3) comprend une saillie (27), qui s'étend vers l'intérieur à partir de la paroi extérieure (26) de la partie inférieure (3), afin de soutenir un fond (24) du support (1), **caractérisée en ce que** la partie supérieure (2) est soudée à la partie inférieure (3), de telle manière qu'une étanchéité de l'aimant (4) soit assurée et qu'il se forme un siège ferme pour le support (1).

2. Tubulure de remplissage selon la revendication 1, **caractérisée en ce qu'**il ne se trouve que la paroi extérieure (25) de la partie supérieure (2) radialement vers l'extérieur directement à côté de l'aimant (4) et que la paroi intérieure (23) du support radialement vers l'intérieur directement à côté de l'aimant.

3. Tubulure de remplissage selon la revendication 1 ou 2, **caractérisée en ce que**
la tubulure de remplissage (9) comprend un anneau d'étanchéité (12),
un diamètre intérieur de la paroi extérieure (25) de la partie supérieure (2) correspond à un diamètre extérieur du fond (24) du support (1),
le fond (24) présente radialement à l'extérieur une rainure annulaire (14), et
l'anneau d'étanchéité (12) est disposé dans la rainure (14) et protège l'aimant (4) de façon étanche au fluide.

4. Tubulure de remplissage selon la revendication 1 ou 2, **caractérisée en ce que**
la tubulure de remplissage (9) comprend un anneau d'étanchéité (12),
un diamètre intérieur de la paroi extérieure (25) de la partie supérieure (2) correspond à un diamètre extérieur du fond (24) du support (1),
la paroi extérieure (25) de la partie supérieure (2) présente radialement à l'intérieur une rainure annulaire, et
l'anneau d'étanchéité (12) est disposé dans la rainure et protège l'aimant (4) de façon étanche au fluide.

5. Tubulure de remplissage selon l'une quelconque des revendications précédentes, **caractérisée en ce que** la tubulure de remplissage (9) comprend un anneau d'étanchéité (13),
la paroi extérieure (25) présente entre la première ouverture (21) et l'aimant (4) à proximité de l'aimant (4) une rainure annulaire (15), et
l'anneau d'étanchéité (13) est disposé dans la rainure (15) et protège l'aimant (4) de façon étanche au fluide.

6. Tubulure de remplissage selon l'une quelconque des revendications précédentes, **caractérisée en ce que** la paroi extérieure (25) de la partie supérieure (2) présente intérieurement au moins une rainure d'aération (11), qui s'étend axialement.

7. Véhicule avec une tubulure de remplissage (9) selon l'une quelconque des revendications précédentes et un réservoir (6) couplé à la tubulure de remplissage (9).

8. Véhicule selon la revendication 7, **caractérisé en ce que** le réservoir est un réservoir d'urée (6).
